# EUROPEAN PATENT APPLICATION

(11) **EP 4 516 498 A1**
(43) Date of publication of application: **05.03.2025**
(21) Application number: 23194691.4
(22) Date of filing: 31.08.2023
(51) Int. Cl.: B32B 3/08, B32B 3/26, B32B 3/28, B32B 3/30, B32B 5/26, B32B 27/08, B32B 27/32

(54) **IMPACT PROTECTION PLATE FOR A BATTERY ELECTRIC VEHICLE**

(71) Applicant: Autoneum Management AG, 8406 Winterthur (CH)
(72) Inventor: Haberl, Johannes, 8005 Zürich (CH); Papadimas, Alexander, 8041 Zürich (CH); Costa, Liborio Ivano, 8405 Winterthur (CH)

(57) **Abstract**

Structural part for automotive applications comprising at least one area or layer comprising a consolidated layer of random organised unidirectional UD pieces comprising clusters of unidirectional fibers bound at least partially to neighbouring pieces.

## Description

### Technical Field

The invention relates to an impact protection plate or panel for a battery electric vehicle and a method of producing such sheets or laminates.

### Background Art

Automotive suppliers are protecting the lower area of the battery casing holding a traction battery underneath the vehicle with an impact protection plate. An impact event that would break or impale the battery casing could cause a mayor fire event also known as a runaway event, whereby any passengers but also by passers may be severely endangered.

Current solutions are based on thick metal plate structures, however these have the disadvantage that an impact with a stone or an obstacle on the road damages the material, while increasing the fatigue of the material itself. Multiple impacts may cause the part to become extremely deformed.

Unidirectional (UD) tapes are used in many industries to induce stiffness of a part, thereby contributing to the toughness of the parts or surfaces. The UD tapes are thin materials with a high content of endless filaments positioned in a unidirectional way -hence the name embedded in a thermoplastic matrix. As these tapes are contain unidirectional filaments, or fibers, they are normally applied in multiple plies with a change of direction between one ply and the next of for instance 90°, generally known as cross ply. The thermoplastic material used as a matrix may be one of polypropylene, polyamide, polyester or high-density polyethylene, as well as copolymers and blends of all the above. As endless filament material glass, carbon or natural based materials may be used.

Multiple plies of UD tape may be formed into sheets or laminates, to be used later in the formation of the final part. A disadvantage of UD tapes is the reduced lamination of the tape to other surfaces as well as the difficulty to deep draw or form UD tapes in a 3-dimensional shape. Moulding may be difficult and lead to stress within the endless filament tapes, distorting the shape.

Furthermore, there is a need for reducing cut off waste materials from at least the UD tape industry. Sheets or laminates are very often pre-cut to enable a better forming of the part, as the multi-ply material is hard to cut. So, many of the applications using UD tapes, have waste material like cut outs, cut offs or end-of-roll waste material that are difficult to recycle. In the case of carbon fiber-based UD tapes, the cost of the carbon fiber is such that recycling is a possibility even by separating the carbon fibers from the matrix, this is however not an attractive option for glass fiber based UD tapes.

There is a need for a better utilisation of resources. In addition, there is a need for further optimising the moulding processes for sheets or laminates or panels with enough impact protection to enlarge the field of usage to more intricate forms.

### Summary of the invention

The object is achieved by the structural part according to the main claim and the claims dependent on it, as well as by the method of producing such a structural part and the use of such a structural part in an automotive application, in a battery electric vehicle.

In particular, with a structural part for automotive applications comprising at least one area or layer comprising a consolidated layer of random organised unidirectional UD pieces comprising clusters of unidirectional fibers bound at least partially to neighbouring pieces.

Unidirectional (UD) tapes are endless fibre-reinforced tapes of different widths comprising unidirectionally aligned reinforcing fibres, preferably glass fibres, embedded in a thermoplastic matrix. They are used to reinforce materials to increase the stiffness and/or toughness of the material or product. These tapes are produced in bands or tapes, but also pre-laid UD tapes may be used to reinforce a part. During the production of such tapes and or pre-laid UD tape products UD tape waste like cut outs, cut offs, or end of roll accumulate.

Pieces of UD tape waste or UD tapes cut into pieces are defined as UD pieces. Because of the origin of the UD pieces, the unidirectional aligned reinforcing fibers are maintained. Precise cutting of the UD tapes or UD tape waste provide for smaller pieces with a precise length of the unidirectional aligned fibers within the pieces, while creating a layer with such pieces creates difference in direction between neighbouring pieces within the layer or area.

UD tapes are difficult to mould in a strong 3-dimensional shape as the endless filaments cannot be stretched significantly and therefore cannot easily be shaped well by compression. Surprisingly, by using a layer of UD pieces, the pieces can slide over each other and easily form bends, while the long fibers maintain the integrity and stiffness of the thus produced layer or product.

The pieces may be substantially equal in size or may vary. For instance, different batches with different average sized pieces may deliberately be combined to cover larger areas or bigger bends.

UD pieces can be obtained from shredding or cutting UD tapes or UD tape based material into smaller segments, so called pieces. These pieces may be formed in every shape that may benefit the purpose, for instance round, square or in a random shape.

One of the advantages of using shredded or cut UD tapes is that the fibres are pre-oriented within the pieces, hence they create locally a bundle of fibres in roughly one direction parallel to each other.

Hence, by creating a layering of pieces, with pieces oriented next to each other as well as partly overlapping each other, bundles of glass fibres are randomly oriented and help to create a more isotropic material, i.e. with a more constant bending stiffness over the surface of the layer. This is different from other short or long fiber reinforced materials, as those produced by injection moulding or D-LFT process, where during the moulding process, the material is forced to flow and fill the mould cavity. As a result, the fiber orientation is controlled by the flow of the material in such a way that the majority of fibers is aligned parallel to the direction of material flow and leading to a drop of mechanical performance in the perpendicular direction. Furthermore, as the bundles of fibres are not restrained in their movement like endless filaments, they are able to migrate within the material layers during moulding.

The length of the fibers depends on the overall size of the pieces, in particular the length of the pieces in the direction of the glass filaments. By using cross or multi-ply pieces the length of any direction should be preferably at least 10 mm, preferably between 20 and 100mm, more preferably between 25 and 60mm. All lengths are +/-10% as the cutting of the pieces may not be precise, in particular when using waste material, a small percentage of the pieces up to 15% may be formed by smaller scraps or pieces. However, these may be beneficial in filling gaps and obtaining a more even layer. For the same reason also a combination with extra large pieces may be an advantage for certain requirements of locations within a part construction.

The UD pieces may have at least a length parallel to the direction of the long fibers of 50mm +/-10%, preferably at least 70mm +/-10%, such that the fibers of the UD pieces have a length of at least 50mm +/-10%, preferably at least 70mm +/-10%.

The UD pieces may have a content of fibers higher than 20% by weight, preferably higher than 40% by weight, even more preferably higher than 60% by weight.

UD pieces may be irregular shaped and sized, for instance with a maximum size of 50 by 50 millimetres. These cut pieces may be pressed into a consolidated sheet for instance using compression or vacuum moulding, resulting in a laminate with randomly oriented, discontinuous glass fibers, however organised in local areas of substantially parallel organised fibers (where originally the UD pieces were). No additional resin may be needed to make the sheet from UD pieces alone.

Preferably, pieces with the same or chemically compatible resins are mixed. While the fibers may differ within the matrix for instance both glass and carbon fiber-reinforced pieces may be combined depending on properties required in the final part that will be formed from the random UD pieces.

Cross-ply laminates have two plies of UD tape oriented at 0/90 degrees and multiaxial UD laminates have at least two plies of UD tape oriented at different angles in all orientations including but not only 0/90 degrees.

Alternatively, pieces may be made from cross-ply or multi-ply material, already comprising multiple layers of UD tapes.

In one preferred embodiment the larger UD pieces are formed in laminate layer and after placement in the mould the material is cut into pieces before application of one or more layers on top

The UD pieces comprise at least one ply of parallel reinforcing fibers embedded in a thermoplastic matrix, whereby the fibers in each ply are organized in substantially one direction of the piece substantially parallel to the surface. Preferably the thermoplastic matrix is one of polypropylene, polyamide, polyester, or high-density polyethylene, as well as copolymers and blends of all the above. It is preferred that at least the main portion of the UD pieces used are based on the same or similar basis material. As the UD pieces might come preferably from recycled or reclaimed sources a small amount of contamination might occur without deferring from the current invention.

Preferably the UD pieces comprise of glass fibers or carbon fibers in a polypropylene based matrix. UD pieces with glass fibers may be combined with UD pieces with carbon fibers.

The unidirectional fiber reinforced pieces used may comprise more than one ply organized as cross ply in 0 and 90° angle to the fiber direction in the adjacent ply, and/or as multi-ply in any angle between 0 and 90° to the fiber direction in the adjacent ply or plies. Using multi-ply UD pieces, may further optimise the isotropic behaviour of the overall layer in bending tests in all directions of the plane of the structural part.

The UD pieces are obtained by cutting monolayer UD tape or multilayer UD tapes or UD tape waste comprising such UD tapes to size, such that most fibers within the pieces have at least a fiber length between 10 and 50 mm. While by monolayer tape this could be cutting the UD tape into preferred length pieces, whereby the width may be dictated by the width of the UD tape at hand. In case of cross ply or multi-ply tape, the UD pieces will be substantially closer to a round or square shape to ensure the right fiber length.

UD pieces are defined as pieces of unidirectional long fibers embedded in a matrix whereby the fibers are oriented in plane of the cut pieces.

The UD pieces may be covered or sprayed with a thermoplastic adhesive to further optimise the binding between the pieces and any adjacent layer where available. Alternative they are premixed with a binder powder to further optimise the binding and or the movement to the final position, particular in more intricate 3-dimensional shape this might be an advantage. Preferably the adhesive used is the same or equivalent to the matrix material used in the UD pieces.

By using multiple UD pieces in an area or a layer, a more pliable yet resilient material may be obtained.

In one aspect of the invention, the consolidated layer or area formed by random organised pieces of cut unidirectional tape bound at least partially to neighbouring pieces, may be combined with at least one Long fibre-reinforced thermoplastics (LFT) composite layer comprising a thermoplastic polymer matrix and discontinuous reinforcement fibres with a length to a diameter aspect ratio greater than the critical aspect ratio.

Contrary to the UD tape or UD pieces the reinforcement fibers in the LFT composite layer are organised in a random way and due to the production process, the length of the fibers may have a broader variance with a majority of the fibers being shorter than the fibers in the UD pieces.

Preferably a LFT material is used based on a D-LFT process whereby the glass filaments or tows are fed in the form of endless filaments into an extruder and mixed with the heated thermoplastic matrix. By the action of the extruder the tow is broken into pieces with a fiber length range. Preferably the fiber length in the LFT is in the range 10-25 mm. Fiber length below 10 mm or up to 50mm, preferably up to 100mm can be achieved depending on the extruder used. Preferably the largest part of the fibers is between 10 and 50mm. Preferably the D-LFT process is used as there the longest fibers may be consistently achieved compared to other flow-moulding processes.

In LFT process based on pellet the initial length is already restricted by the length of the pellets and further reduced during the thermal extrusion process, giving rise to less long fibers and therefore less strong material properties. However, LFT pellets or alternative particulate forms of short fibers in matrix, may be used locally or combined with the UD pieces to enhance the flowability of the UD pieces for instance in larger ribs or protrusions.

Preferably a D-LFT with a fiber content between 20 and 35% by weight may be used. Due to the mixing, the fibers are distributed in all directions within the layer and form a random organisation. Based on the flow of the material, preferred fiber orientations are obtained in particular flow areas. A combination of a D-LFT composite layer moulded together with an area or layer of UD pieces ensures a good bonding and even partial mixing of both materials, while the more organised groups of long fiber of the UD pieces enriches locally the fiber reinforced composite material and will create a zone of higher impact protection and/or an increase in overall impact protection and or bending stiffness. The combination of D-LFT material with a fiber content of 20-35% and UD pieces with a fiber content of 60-80% enables local tuning, in the sense of fiber enrichment, of the final fiber content in the part. The combination of D-LFT material that enables the orientation of fibers in the flow direction and UD pieces, where the fiber orientation remains at certain extend only moderately altered due to material flow enables an engineering of fiber orientation in specific regions of the part.

Surprisingly by placing UD pieces in areas where a protrusion is planned for instance a rib or protrusion for a mounting point, the UD pieces can melt and form while LFT material, can fill up any spaces between the thus loosed up UD pieces and or pull them into its flow filling up the protrusions. By moving the UD pieces and or the fibers held by the pieces, a stronger area can be obtained locally or a stronger layer overall. The UD pieces form a layer that is less strong than UD tapes but more versatile in the usage and being stronger than LFT. The UD pieces increase locally the fiber content as well as the isotropy of the material, preferably the fiber content is locally increased with at least 10%, preferably at least 15%, the more the better.

The heat of the D-LFT composite may be enough to heat up the UD pieces to bond these into the layer of D-LFT, or the layer formed by UD pieces, alternatively the UD pieces, or layer or area formed by such is heated before the moulding step for instance by infrared heating or hot air.

Any combination of at least one ply of UD tapes and/or a basic layer of D-LFT combined with a UD pieces layer and or area falls within the scope of the invention. More preferably all 3 materials may be used in combination.

The materials used for the matrix of the UD pieces, the UD tape and or the LFT may contain any of the usual additives used for these materials, as antioxidants, and/or coupling agents and/or additives to make the parts black and/or mineral fillers. Preferably they all have the same matrix base, preferably polypropylene and either glass or carbon as the main fiber, whereby fibers may differ between the materials used.

Some examples of preferred combinations will be disclosed without restricting to the possible combinations not discussed in detail but clear for a skilled person from the disclosure.

In one preferred embodiment an Impact protection panel for an automotive application is provided comprising a sandwich structure with at least a first layer and a second layer comprising at least one ply of UD tape, and at least a thermoplastic core layer formed comprising a thermoplastic matrix material and chopped glass fibers, whereby the core layer is between the first and second layer to form a sandwich structure. The impact protection panel further comprises at least one layer formed by pieces of shredded UD tape aligned in random order at least partially overlapping with adjacent pieces to form a substantially closed layer. Preferably this at least one layer may be between the UD tape and the core layer, or on the core layer on the surface facing away from the UD tape ply layer, or on top of the UD tape layer. The core layer is preferably formed of D-LFT.

Surprisingly the layer formed by pieces of cut UD tape, hereinafter called UD pieces layer, is more pliable during the moulding than the endless filament in the UD tapes, while the core matrix and the glass fibers is able to move through the UD tape structure and flow inside the protrusion to fill the form. By using the UD pieces it is possible to create at least locally areas with more and longer glass fibers, than the core material which are still able to migrate enough to also fill extending areas like beads or rib structures bridging the UD tapes and the core material to result in a more even distributed glass fibers throughout the structure enhancing the stiffness and the toughness of the part upon impact.

D-LFT stands for Direct long-fiber thermoplastic (D-LFT) a long-fiber thermoplastic material, whereby the glass fibers are mixed directly into the extruder in the form of a tow and cut as part of the extruder action creating fiber pieces mixed inside the thermoplastic material.

Normal LFT is working with a similar process but is based on premixed material that is cut in a maximal length, hence the fiber length is dependent on this pre-cut material, often sold in the form of pellets known as pelletized long-fiber thermoplastic (LFT) LFT.

By combining UD pieces with LFT it is possible to increase fiber length and fiber volume fraction locally thereby boosting the mechanical performance of the part produced.

Any automotive part that needs structural integrity may benefit from a basic core layer and at least one layer of UD pieces. Whereby the layer of UD pieces may be formed of multiple UD pieces partly stacked on top of each other to form a two-dimensional sheet or layer structure.

The structural part or structural panel or a 3D moulded part with the material according to the invention may be used as an underbody panel or shield, and under engine panel or shield, a dash panel or panel between the engine or motor area and the passenger compartment, a flooring panel, a panel for raising the floor inside a car as used in carrier vehicles, a parcel shelf, a bumper, a spare wheel pan, a battery casing, a battery carrier, a battery lid, an impact protection plate.

A possible process for making the material according to the invention might include the following steps.

Forming a layer or area of UD pieces, whereby multiple pieces of UD tape are randomly laid and or stacked to make a layer or area of the required thickness or of the required thickness variation. Preferably the layer or area is preheated for instance with infrared or hot air.

Optionally, additional binder in the form of a solution or powder may be applied between the pieces or on the surface of the layer. Alternatively, pieces are mixed with binder before making the layer. The binder may aid binding and or close any gap between the UD pieces.

In one variant the layer is laid with gaps to aid the flow of LFT through the layer on dedicated areas. Alternatively, the density of the UD pieces may be increased or reduced to guide the LFT during moulding in a preferred direction.

The layer may be created outside of the mould and eventually pre-bonded before introducing it to the mould, alternatively the layer or the areas may be created directly inside the mould or on top of an already created layer.

The layer or area may be combined with additional layers as required and thermally moulded to form the final product.

In a product with a combination of at least one layer of random organised UD pieces and an LFT layer, upon closing the mould the LFT material may mix with the UD pieces and partly move the fibers within the UD pieces to form a new combined material that fills the mould and in particular any protrusion in the form of ribs, beams or domes.

Surprisingly, the combination of the LFT material, known for its good mouldability but forming weak points when discussing impact protection and breaking strength, and a local reinforcement or enrichment with bundles of fibers coming from UD pieces, increases the overall strength and the impact of the part and in particular of any mounting domes or mounting areas.

A process for Direct-LFT (D-LFT) known in the art, as preferred for the basic material or core material of the invention, comprises a first twin-screw extruder to obtain a first mixture, pre, heating and mixing the mixture to form a first extrudate. This extrudate is fed into a second extruder. By the flowing action of the first extrudate coming from the first extruder, the endless glass filaments provided as rovings on bobbins are pulled into the second extruder. In the second extruder, the endless filaments are cut into course pieces with an average size of between 10-25 mm of the bulk of the fibers formed and mixed into the extrudate.

The first mixture may be a matrix mixture, for instance polypropylene, preferably without glass fiber content. This will ensure a good mixing of the matrix and any additives used, while maintaining the energy needed for mixing and melting low.

The second mixture will be a matrix mixture for instance polypropylene with a concentrated amount of glass fibers preferably 60 to 70%, this mixture should not necessarily need a twin-screw extruder, a single screw system just for melting the mixture would be enough. The mixture may be provided in premade pellets or sticks and only need melting and homogenisation before it can be supplied to the first extrudate and the continuous glass filament rovings.

Surprisingly in a combination of UD tape, UD pieces and D-LFT material, the D-LFT may be pushed through the UD tape and mix with the UD pieces, thereby partly engulfing the UD pieces and or the bundles of fibers within these pieces strengthening the protrusion thus formed.

Preferably UD tape plies used may be precut to enable an easier and or directed flow of the LFT. In one embodiment the at least one ply of UD tapes forms a layer and are cut, perforated, or slid into an alternating pattern to form a flexible grid.

### Figures

Figure 1 the layer of random UD pieces according to the invention,
Figure 2 A and B examples of at least one layer of UD pieces according to the invention in different combinations,
Figures 3 and 4 example of at least one area of UD pieces in a protrusion according to the invention.
Figure 5A and B examples with variations of domes or ribs including random pieces of UD pieces according to the invention.

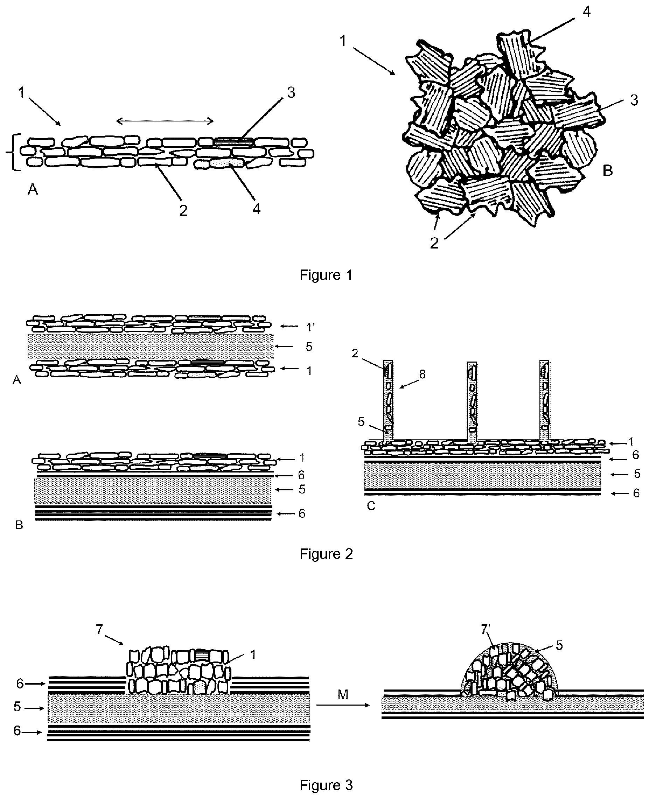

Figure 1 is showing schematically a cross section figure A and a top view figure B of an area or layer 1 formed by random organised pieces 2,3 and 4 of UD tape. Upon forming the layer, the pieces are arranged substantially in plane (indicated by the double arrow above the surface) to the surface of the pieces, however some pieces might have a direction in another direction out of plane. An area or layer is preferably formed of more than one piece layered on top of at least one other piece, such that after forming a layer with random organised clusters of unidirectional long glass fibers are formed. For instance, one piece 3 might have a cluster of glass fibers indicated with the lines which are perpendicular from the direction of the cluster of glass fibers as indicated in piece 4 with the dots. Figure 1B is showing this effect from top view, in a real-life part however the direction might also change in a third dimension slanting upwards or downwards.

After moulding and/or thermal consolidating the area or layer, the matrix was molten and resolidified thereby at least partly reducing the boundaries between initial pieces adjacent to each other, however the clusters of unidirectional fibers within the pieces will stay substantially together. Depending on the mould and the pressure used, the clusters may move substantially together to a new location and/or orientation thereby strengthening the full part by enriching with long glass fibers. Hence already using just randomly oriented UD pieces it is possible to create a new layer or part. This layer or part may be used as such or may be combined with at least one additional layer.

In Figure 2 A to C the layer as described at figure 1 and according to the invention is combined with at least one additional layer.

For instance, in figure 2A the layer of random UD pieces is 1 combined with a long fiber thermoplastic (LFT) layer 5 comprising long fibers random organised in a thermoplastic matrix. The UD pieces layer may be prepared beforehand, or a loose layer of random UD pieces may be layered at the surface of the stack, LFT extrudate may be positioned on top and or next to the UD pieces and the material moulded. Optionally locally a further layer or area 1' may be build up with UD pieces randomly organised according to the invention. Preferably to prevent warpage, material is placed on both surfaces of the LFT layer, forming a sandwich.

In figure 2B an LFT core layer 5 is combined with at least one ply of UD tape layered on one surface of the LFT core layer, while the other surface comprises at least one UD pieces layer, optionally combined with a least one ply of UD tape. By placing a layer of UD pieces on one side of the LFT core layer, it is easier to make more complex shapes or structure on this site of the surface without sacrificing the strength.

By combining UD tapes with LFT and UD pieces at least locally it is possible to fine tune both the needed strength and mouldability of 3-D moulded parts, For instance in the case of an impact protection plate for underneath a car, the surface facing the road is most impacted by flying objects like stone or impacts with object on the road like curb stones, hence preferably at least one full ply of UD tape may be used on this side. While the side of the LFT surfacing the bottom of the car, for instance the battery box or alternatively forming part of the battery box, facing towards the batteries, may be formed in a complex 3D shape including mounting plugs and or ribs. Surprisingly, it was found that using UD pieces enables a more precise moulding of such protruding areas without reduction of the strength, as the pieces may be moved by the compressional force moving the LFT and thereby displacing the UD pieces it is possible to obtain a stronger area, than with LFT alone.

Figure 2C is showing an example of such a part with high ribs 8 on one side, normally facing the car while the other side is substantially flat.

Preferably the construction is built based on a combination of at least one ply of UD tape as layer 6 on the flat surface side of the part, a core of LFT and a surface layer of pieces of UD tape formed by the action of the LFT during compression moulding into ribs, which may for instance hold battery cells in place. Optionally at least one ply of UD tape may be placed between the LFT core layer and the random UD pieces layer.

Figure 3 shows an example of an area application, whereby only locally UD pieces 1 are randomly applied, for instance in this case on an area between two layers of at least one layer of UD tape 6, for instance for an area where later a hole is drilled. The pieces will partly merge with the LFT material 5 during compression moulding to make a reinforced area that is stronger than the LFT alone. The other surface might comprise at least one ply of UD tape 6.

As it is difficult to form a protrusion 7, with plies of UD tape while LFT alone will form the weakest point, the combination with locally applied UD pieces strengthens locally the part, while a better formation of the protrusion is possible. The clusters of substantially unidirectional long fibers coming from the UD pieces enhance the local strength of the part by fiber enrichment, which cannot be achieved by plies of UD tape or LFT material alone. This way of application may enhance the strength of pass-through areas or mounting areas or increase strength around integrated metal or plastic parts like washers or screw tread.

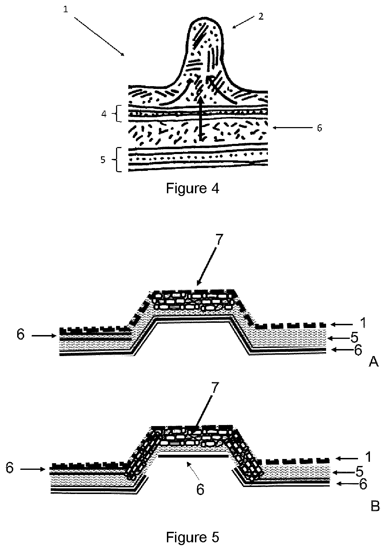

Figure 4 is showing a schematic cross section of a part, whereby the situation is shown during moulding of a protrusion, for instance as shown in figure 3. The matrix of all layered materials is molten and compressed together to form the final shape, the matrix of the LFT is pressed between and through the plies of UD tape and pushed into the surface layer formed by the UD pieces. By the movement of the LFT including random organised long fibers(arrows) the bundles of unidirectional fibers of the UD pieces are moved at least partially into the protrusion, enhancing the fiber content of the LFT and further strengthening the protrusion as well as the connection of the protrusion to the main body of the part.

Figure 5 A and B are showing a comparable situation as figure 3 and 4 however here the area is not only increased in thickness, but rather formed in a dome shape structure, often used for connecting points. In figure 5A a variant is shown with an uninterrupted ply of UD tape around the dome and an enrichment with fibers using random UD pieces on the top area 7 of the dome shape. In this first variant the UD tape at the lower surface of the dome will hamper the forming and restrict the size of the final dome possible. In variant figure 5B, the UD tape ply is locally cut to form a strip or piece that can move upwards during moulding forming the protrusion. The protrusion may be a round shaped dome but also a hollow rib is possible with this method enhancing the strength of the sides of the protruding dome or rib by using random UD pieces.

An example of a part according to the invention can be an Impact protection panel comprising a sandwich structure with at least a first layer and a second layer whereby the first and second layer are comprising at least one ply of UD tape and at least a thermoplastic core layer comprising a thermoplastic matrix material and chopped glass fibers whereby the core layer is between the first and second layer to form a sandwich structure, characterised in that the impact protection panel comprises at least one layer or area formed by pieces of cut UD tape aligned in random order at least partially overlapping with adjacent pieces to form a substantially closed layer or area.

## Claims

1. Structural part for automotive applications comprising at least one area or layer comprising a consolidated layer of random organised unidirectional UD pieces comprising clusters of unidirectional fibers bound at least partially to neighbouring pieces.

2. Structural part for automotive applications according to claim 1, whereby the UD piece comprises at least one ply of parallel glass fibers embedded in a thermoplastic matrix whereby the glass fibers are organized in substantially one direction in each ply of the piece substantially parallel to the major plane of the part.

3. Structural part according to claim 2, whereby the unidirectional piece comprises more than one ply organized as cross ply in 0 and 90° angle to the fiber direction in the adjacent ply, and or as multi-ply in any angle between and included 0 and 90° to the fiber direction in the adjacent ply or plies.

4. Structural part according to one of the preceding claims, whereby the pieces are cut to size such that most fibers within the pieces have at least a fiber length between 10 and 200mm, preferably between 10 and 100 mm.

5. Structural part according to one of the preceding claims, whereby the area or layer comprising the pieces is variable in thickness.

6. Structural part according to one of the preceding claims, further comprising a fiber reinforced thermoplastic basic layer, comprising random organized long fibers embedded in a thermoplastic matrix.

7. Structural part according to claim 6, whereby the substantial majority of long fibers of the basic layer have a fiber length >10 mm and <100 mm, preferably > 50 up, preferably at least 80% of the fibers is between 10-25 mm.

8. Structural part according to claim 6 or 7 whereby the long fibers are glass fibers.

9. Structural part according to claim 6, 7 or 8, whereby the glass fiber content of the basic layer is between 20 and 40% by weight.

10. Structural part according to one of the preceding claims, further comprising at least one stiffening layer comprising at least one ply of unidirectional tapes covering at least partially at least one layer or area of the structural part.

11. Structural part according to claim 10, whereby the unidirectional tapes comprise endless filament glass fibers embedded in a matrix, preferably a polypropylene or copolymers of polypropylene or blends of the two, based matrix.

12. Structural part according to claim 10 or 11, comprising at least one basic layer covered on both surfaces with a stiffening layer formed by between 1 and 30, plies of unidirectional tapes, preferably between 4 and 25 plies of unidirectional tape, further comprising at least one area with the UD pieces, whereby the UD pieces are at least partially formed into at least one protrusion, for instance a rib, bead, beam, hollow rib or dome.

13. Structural part according to claim 10 or 11, whereby the material at least partially forms at least one protrusion, for instance a rib, bead, beam, hollow rib or dome with a glass fiber content > than the glass content of the basic layer, preferably at least 10% higher, preferably the glass content is at least 40%.

14. Structural part according to claim 12, whereby the at least one protrusion is formed by a combination of at least the basic material and the UD pieces whereby the parallel fibers of the UD pieces are moved at least partially into the protrusions.

15. Impact protection panel comprising a sandwich structure with at least a first layer and a second layer whereby the first and second layer are comprising at least one ply of UD tape and at least a thermoplastic core layer comprising a thermoplastic matrix material and chopped glass fibers whereby the core layer is between the first and second layer to form a sandwich structure, **characterised in that** the impact protection panel comprises at least one layer or area formed by pieces of cut UD tape aligned in random order at least partially overlapping with adjacent pieces to form a substantially closed layer or area.
